# EUROPÄISCHE PATENTANMELDUNG

(11) **EP 3 965 030 A1**
(43) Veröffentlichungstag der Anmeldung: **09.03.2022**
(21) Anmeldenummer: 21191292.8
(22) Anmeldetag: 13.08.2021
(51) Int. Cl.: G06Q 10/04, G06Q 40/08, G06Q 50/02

(54) **COMPUTERGESTÜTZTES LANDWIRTSCHAFTLICHES VERWALTUNGSSYSTEM**

(30) Priorität: 03.09.2020 DE 102020123019
(71) Anmelder: 365FarmNet Group KGaA mbH & Co. KG, 33428 Harsewinkel (DE)
(72) Erfinder: Grundmann, Marten, 10829 Berlin (DE)
(74) Vertreter: CLAAS Gruppe

(57) **Zusammenfassung**

Die vorliegende Erfindung betrifft ein computergestütztes landwirtschaftliches Verwaltungssystem zur Planung, Überwachung und Verwaltung von Arbeits- und Betriebsdaten zur Aus- und Durchführung landwirtschaftlicher Prozesse, wobei das Verwaltungssystem eine Serverplattform (5) mit zumindest einer Datenbank (6) sowie zumindest einer Schnittstelle (10) zur bidirektionalen Kommunikation mit zumindest einer externen Datenquelle (11) umfasst, wobei die zumindest eine Datenbank (6) zur zyklisch aktualisierbaren Hinterlegung einer für die Planung, Überwachung und Verwaltung von landwirtschaftlichen Prozessen relevanten Datenbasis eingerichtet ist, wobei ein Maschinenassistenzsystem (9, 12) dazu eingerichtet ist, in Abhängigkeit von einer Eingabe zumindest einer spezifischen Vorgabe mittels einer Eingabe-Ausgabeeinheit (13) des Maschinenassistenzsystems (9, 12) wenigstens eine Versicherung über die Serverplattform (5) automatisch abzuschließen, wobei das Maschinenassistenzsystem (9, 12) dazu eingerichtet ist, unter Berücksichtigung der zumindest einen eingegebenen spezifischen Vorgabe, der hinterlegten Datenbasis und von empfangenen Prognoseinformationen, die von der zumindest einen externen Datenquelle (11) bereitgestellt werden, die Eintrittswahrscheinlichkeit eines zu versichernden Schadensereignisses zu bestimmen und eine geeignete Versicherung auszuwählen.

## Beschreibung

Die vorliegende Erfindung betrifft ein computergestütztes landwirtschaftliches Verwaltungssystem zur Planung, Überwachung und Verwaltung von Arbeits- und Betriebsdaten zur Aus- und Durchführung landwirtschaftlicher Prozesse gemäß dem Oberbegriff des Anspruches 1 sowie ein Verfahren zum Betreiben eines computergestützten landwirtschaftlichen Verwaltungssystems gemäß dem Anspruch 15.

Computergestützte landwirtschaftliche Verwaltungssysteme kommen zur Planung, Überwachung und Verwaltung von Arbeits- und Betriebsdaten bei der Aus- und Durchführung landwirtschaftlicher Prozesse zum Einsatz, mit dem Ziel, Ressourcen, wie beispielsweise landwirtschaftliche Arbeitsmaschinen, landwirtschaftliche Arbeitsaggregate, Betriebsstoffe, Saatgut, und dergleichen mehr, optimal nutzen zu können und Erträge durch eine aufeinander abgestimmte Einsatz- und Ressourcenplanung zu optimieren. Das Verwaltungssystem umfasst eine Serverplattform mit zumindest einer Datenbank sowie zumindest einer Schnittstelle zur bidirektionalen Kommunikation mit zumindest einer externen Datenquelle, wobei die zumindest eine Datenbank dazu eingerichtet ist, eine für die Planung, Überwachung und Verwaltung von landwirtschaftlichen Prozessen relevante Datenbasis zyklisch aktualisierbar zu hinterlegen. Die Begrifflichkeit "Planung, Überwachung und Verwaltung von Arbeits- und Betriebsdaten bei der Aus- und Durchführung landwirtschaftlicher Prozesse" ist weitgefasst zu verstehen. So sollen hiervon alle Maßnahmen und Vorrichtungen umfasst sein, die zur Durchführung von landwirtschaftlichen Prozessen erforderlich sind. Ein landwirtschaftlicher Prozess kann einzeln durch eine landwirtschaftliche Vorrichtung, d.h. eine landwirtschaftliche Arbeitsmaschine und/oder ein landwirtschaftliches Arbeitsaggregat, durchgeführt werden. Es kann sich aber auch sich um mehrere zeitlich und/oder räumlich aufeinander abgestimmte Prozesse handeln, die durch das Verwaltungssystem administriert und koordiniert werden. Die Anzahl von an einem oder mehreren Prozessen beteiligten landwirtschaftlichen Vorrichtungen kann dabei variieren.

Im Rahmen der Planung für die Aus- und Durchführung landwirtschaftlicher Prozesse durch das Verwaltungssystem ist es erforderlich, sich gegen Risiken abzusichern, die sich beispielsweise aus nicht beherrschbaren Naturereignissen oder anderen äußeren Einflüssen, insbesondere unter Beteiligung Dritter, ergeben können. Beispielsweise kann es zu einem Ernteausfall durch Trockenheit, Hagelschlag, Unfall, Schädlingsbefall oder Wildtierschaden kommen. Um gegen solche Ereignisse abgesichert zu sein, besteht die Möglichkeit des Abschlusses von Versicherungen, die in der Regel räumlich und zeitlich sehr umfangreich sind, d.h. den gesamten Betrieb umfassen und eine Laufzeit über das gesamte Jahr haben.

Der Erfindung liegt das Problem zugrunde, ein computergestütztes landwirtschaftliches Verwaltungssystem derart auszugestalten und weiterzubilden, dass es den Praxisanforderungen im landwirtschaftlichen Bereich besser gerecht wird.

Das obige Problem wird durch die Merkmale von Anspruch 1 gelöst. Vorteilhafte Weiterbildungen sind Gegenstand der Unteransprüche.

Gemäß dem Anspruch 1 wird ein computergestütztes landwirtschaftliches Verwaltungssystem zur Planung, Überwachung und Verwaltung von Arbeits- und Betriebsdaten zur Aus- und Durchführung landwirtschaftlicher Prozesse vorgeschlagen, wobei das Verwaltungssystem eine Serverplattform mit zumindest einer Datenbank sowie zumindest einer Schnittstelle zur bidirektionalen Kommunikation mit zumindest einer externen Datenquelle umfasst, wobei die zumindest eine Datenbank zur zyklisch aktualisierbaren Hinterlegung einer für die Planung, Überwachung und Verwaltung von landwirtschaftlichen Prozessen relevanten Datenbasis eingerichtet ist. Erfindungsgemäß ist vorgesehen, dass ein Maschinenassistenzsystem dazu eingerichtet ist, in Abhängigkeit von einer Eingabe zumindest einer spezifischen Vorgabe für eine zu versichernde Einheit mittels einer Eingabe-Ausgabeeinheit des Maschinenassistenzsystems wenigstens eine Versicherung über die Serverplattform automatisch abzuschließen, wobei das Maschinenassistenzsystem dazu eingerichtet ist, unter Berücksichtigung der zumindest einen eingegebenen spezifischen Vorgabe, der hinterlegten Datenbasis und von empfangenen Prognoseinformationen, die von der zumindest einen externen Datenquelle bereitgestellt werden, die Eintrittswahrscheinlichkeit eines zu versichernden Schadensereignisses zu bestimmen und eine geeignete Versicherung auszuwählen. Der Erfindung liegt somit der grundsätzliche Gedanke zugrunde, singuläre Risiken bei der Durchführung landwirtschaftlicher Prozesse automatisch gezielt abzusichern. Die zumindest eine spezifische Vorgabe für zumindest eine zu versichernde Einheit grenzt den angestrebten Versicherungsschutz gezielt ein. Eine zu versichernde Einheit im Sinne der vorliegenden Anmeldung kann eine Vorrichtung oder ein Ereignis sein. Es wird die von dem Maschinenassistenzsystem bestimmte Eintrittswahrscheinlichkeit eines zu versichernden Schadensereignisses als Auslöser verwendet, um im Vorfeld eine Versicherung abzuschließen. Der Landwirt wird dadurch hinsichtlich des administrativen Aufwands entlastet. Insbesondere bestimmt die zumindest eine spezifische Vorgabe einer zu versichernden Einheit durch den Landwirt den Umfang der abzuschließenden Versicherung.

Vorzugsweise kann die zumindest eine spezifische Vorgabe gewählt sein aus der Gruppe zeitliche und/oder räumliche und/oder maschinenspezifische und/oder pflanzenspezifische und/oder schadensartspezifische Vorgabe. Der Landwirt kann somit den Umfang des automatisiert abzuschließenden Versicherungsschutzes an seine Bedürfnisse angepasst festlegen.

Dabei kann eine zeitliche Vorgabe eine Begrenzung der Versicherungsdauer auf einen Zeitraum eines aufgrund der Prognoseinformationen bestimmten zu erwartenden Schadensereignisses sein. Die Dauer der Versicherung kann somit auf den Zeitraum beschränkt werden, innerhalb dessen ein Eintreten eines Schadensereignisses für wahrscheinlich gehalten wird. Dies gilt beispielsweise für ein Auftreten eines nur singulären Naturereignisses sowie für einen nur saisonalen Einsatz von Vorrichtungen wie landwirtschaftlichen Arbeitsmaschinen und/oder landwirtschaftlichen Arbeitsaggregaten und dergleichen. Ein umfassender Versicherungsschutz von als landwirtschaftlichen Arbeitsmaschinen und/oder landwirtschaftlichen Arbeitsaggregaten ausgeführten Vorrichtungen kann sich in Abhängigkeit von ihrer saisonalen Einsetzbarkeit auf kurze Zeiträume innerhalb eines Jahres beschränken. So können beispielsweise technisch bedingte Ausfallzeiten von landwirtschaftlichen Arbeitsmaschinen und/oder landwirtschaftlichen Arbeitsaggregaten abgesichert werden, die zu einem Ertragsverlust führen. Ebenfalls zeitlich beschränkt kann das Führen der landwirtschaftlichen Arbeitsmaschinen und/oder landwirtschaftlichen Arbeitsaggregaten im öffentlichen Straßenverkehr abgedeckt werden. Aus der Planung mittels des Verwaltungssystems sind die Zeiträume bekannt, innerhalb deren die landwirtschaftlichen Arbeitsmaschinen und/oder die landwirtschaftlichen Arbeitsaggregate außerhalb einer Betriebsstätte, unter anderem auf öffentlichen Straßen, bewegt werden, um beispielsweise zu einem zu bearbeitenden Schlag zu gelangen. Innerhalb dieser Zeiträume besteht ein Risiko eines Unfalls, insbesondere unter Beteiligung eines Dritten.

Ein singuläres Naturereignis kann z.B. ein Hagelschlag oder ein Starkregen sein, dessen Auftreten sich auf einen nur wenige Tage, insbesondere eine nur einstellige Anzahl an Tagen, umfassenden Zeitraum innerhalb eines Jahres einschränken lässt.

Weiterhin kann eine räumliche Vorgabe eine geografische Spezifikation eines Schlags oder mehrere Schläge, einer Betriebsstätte oder eines Teils einer Betriebsstätte und/oder von Wegstrecken zwischen einem Schlag und der Betriebsstätte und/oder mehreren Schlägen sein. Durch die räumliche Vorgabe kann der angestrebte Versicherungsschutz auf relevante Bereiche eingegrenzt werden, auf denen die landwirtschaftlichen Arbeitsmaschinen und/oder die landwirtschaftlichen Arbeitsaggregate bewegt werden. Durch beispielsweise georeferenziertes Aufzeichnen von zurückgelegten Weg- und Arbeitsstrecken lassen sich relevante Bereiche bestimmen. Diese relevanten Bereiche, d.h. insbesondere Betriebsstätte, Schlag, öffentliche und/oder private Wegstrecken, können im Rahmen der Eingabe von räumlichen Vorgaben hinsichtlich ihrer expliziten Auswahl, Lage und/oder Größe angepasst werden. Die räumliche Vorgabe gilt entsprechend auch im Kontext mit einem weiter oben bereits erwähnten singulären Naturereignis, dessen Auftreten in der Regel zudem örtlich begrenzt ist. Somit kann sich eine räumliche Vorgabe auf zumindest einen spezifischen Schlag beschränken, in dessen Bereich das Auftreten eines singulären Naturereignisses erwartet wird.

Des Weiteren kann eine maschinenspezifische Vorgabe die Art einer landwirtschaftlichen Arbeitsmaschine und/oder eines landwirtschaftlichen Arbeitsaggregates sein. Je nach Ausgestaltung, Funktionsweise und Einsatzgebiet einer landwirtschaftlichen Arbeitsmaschine und/oder eines landwirtschaftlichen Arbeitsaggregates kann eine automatisiert abgeschlossene Versicherung neben einer nur zeitlich beschränkten Dauer zudem aufgrund der maschinenspezifischen Vorgabe ausgewählt und abgeschlossen werden. So sind beispielsweise Traktoren als landwirtschaftliche Arbeitsmaschine in der Regel ganzjährig im Einsatz, spezielle landwirtschaftliche Arbeitsmaschinen hingegen, wie beispielsweise Mähdrescher, Feldhäcksler, Ballenpressen oder Roder, oftmals nur während kurzer Zeiträume, die wenige Tage bis zu mehrere Wochen betragen können, wobei diese Zeiträume durch die jeweiligen Erntezeiträume vorgegeben und zeitlich beschränkt sind.

Weiterhin kann eine pflanzenspezifische Vorgabe die Erntegutart, die spezifische Sorte oder die vorhandene Biomasse sein. Durch eine pflanzenspezifische Vorgabe lässt sich der automatische Abschluss einer Versicherung beispielsweise auf einen oder mehrere Schläge begrenzen, die eine bestimmte Größenordnung an Biomasse aufweisen. Informationen über das Vorhandensein von Biomasse und deren Quantifizierung lässt sich durch eine geeignete Überwachung, beispielsweise durch Auswertung von Bildern die in, insbesondere konstanten, zyklischen Abständen mittels Satellit oder einer Drohne erstellt werden, bestimmen. Ebenfalls können Daten über die vorhandene Biomasse bestimmt werden, wenn während des Anbauprozesses des Erntegutes beispielsweise mittels des Verwaltungssystems geplante Düngemaßnahmen oder Pflanzenschutzmaßnahmen durchgeführt werden. Während der Durchführung einer solchen Maßnahme kann der Feldbestand, beispielsweise optisch, durch eine entsprechende Sensoreinrichtung, die an der Arbeitsmaschine und/oder an dem Arbeitsaggregat angeordnet sein kann, erfasst und ausgewertet werden. Diese Daten können dem Verwaltungssystem durch Übertragung zur Verfügung gestellt werden, was insbesondere dem Zweck der Protokollierung aber auch der Auswertung des Erfolgs der durchgeführten Maßnahmen wie einer Düngemaßnahme oder einer Pflanzenschutzmaßnahme dient. Die Erntegutart als pflanzenspezifische Vorgabe ist auch in Hinblick auf ihren Aussaat- und Erntezeitpunkt von Bedeutung, da innerhalb der Zeiträume zwischen der Aussaat und dem Ernten der Einfluss von Witterungsbedingungen auf das jeweilige Erntegut stark variieren kann.

Des Weiteren kann eine schadensartspezifische Vorgabe ein Schaden aufgrund von Witterungseinflüssen, Schädlingsbefall, Wildtiereinflüssen und/oder eines Ausfalls von Arbeitsmaschinen und/oder Arbeitsaggregaten beim Führen im öffentlichen Straßenverkehr und/oder aufgrund eines technischen Ausfalls während eines landwirtschaftlichen Arbeitsprozesses bzw. des Erntebetriebes sein. Eine schadensartspezifische Vorgabe ermöglicht eine gezielte Differenzierung zwischen den Schadensarten, deren Auftreten beispielsweise bereits regional stark variieren kann. So können Schläge in der Nähe von Wäldern stärker Wildtiereinflüssen unterliegen als Schläge, die beispielsweise durch umgebende Schläge weiter von Wäldern beabstandet sind. Schäden bedingt durch Witterungseinflüssen können beispielsweise aufgrund von geografischer Gegebenheiten bzw. Besonderheiten einer Region, wie der Nähe zu Bergen, zu Flüssen etc., variieren. Ausfälle von Arbeitsmaschinen und/oder Arbeitsaggregaten beim Führen im öffentlichen Straßenverkehr, insbesondere durch einen Unfall, sind von der bestehenden Infrastruktur, die eine Betriebsstätte und einen oder mehrere Schläge miteinander verbindet, und der daraus resultierenden Verkehrsbelastung abhängig. Ebenso kann ein Ausfall von Arbeitsmaschine und/oder Arbeitsaggregat aufgrund eines technischen Defekts während eines landwirtschaftlichen Arbeitsprozesses bzw. des Erntebetriebes auftreten, womit zumindest zeitliche Verzögerungen bei der Durchführung des landwirtschaftlichen Arbeitsprozesses bzw. des Ernteprozesses einhergehen.

Insbesondere können die Prognoseinformationen gewählt sein aus der Gruppe umfassend äußere Einflüsse, Ertragsdaten, Planungsdaten, statistische Daten, Anbauinformationen, geografische Daten, Risikoneigung und/oder Ernteguteigenschaften. Äußere Einflüsse bilden insbesondere die Witterungseinflüsse sowie Wildtiereinflüsse oder ein unerwartet hohes Auftreten von Schädlingen, deren Anzahl sich wegen einer für ihre Entwicklung förderliche Witterungsperiode ungewöhnlich vergrößert hat. Das Auftreten von Witterungseinflüssen kann anhand von Wetter- und Klimainformationen gewonnen werden. Dabei handelt es sich um kurzfristige Wetterinformationen, wie im Fall von Hagelschlag, und längerfristige Klimainformationen, wie es bei anhaltendem Ausbleiben von Niederschlag der Fall sein kann. Informationen zu Witterungseinflüssen lassen sich vor allem aus externen Datenquellen beziehen. Ertragsdaten sind in der Regel in der zumindest einen Datenbank des Verwaltungssystems hinterlegt. Entsprechende Aufzeichnungen nimmt der Landwirt vor, um beispielsweise Erträge aus Vorjahren miteinander vergleichen zu können. Hierbei kann das Maschinenassistenzsystem zur Aufzeichnung und Übertragung von Daten eingerichtet sein, die zur Bestimmung der Ertragsdaten erforderlich sind. Dies dient unter anderem dazu, um die Effizienz vorgenommener Maßnahmen zur Ertragssteigerung, wie dem mengenmäßigen Einsatz von Dünger, Pflanzenschutzmitteln und dergleichen mehr, bewerten zu können. Darüber hinaus bilden diese Informationen die Grundlage der Planung für das Folgejahr mittels des Verwaltungssystems. Die Planungsdaten, die den zeitlichen Ablauf der Arbeitsprozesse umfassen, bilden weitere Prognoseinformationen. Daraus lässt sich beispielsweise ableiten, wann, wo und wie lange die jeweilige landwirtschaftliche Arbeitsmaschine und/oder das landwirtschaftliche Arbeitsaggregat im Einsatz war bzw. sein wird. Statistische Daten als Prognoseinformationen betreffen das Auftreten von Ereignissen, die in der Vergangenheit beispielsweise zumindest zu einem Teilverlust der Ernte geführt haben.

Statistische Daten als Prognoseinformationen können aber auch die Wahrscheinlichkeit abbilden, dass eine landwirtschaftliche Arbeitsmaschine und/oder ein landwirtschaftliches Arbeitsaggregat aufgrund eines Ereignisses ausfallen. Hierzu können technische Ursachen als auch ein Verunfallen im öffentlichen Straßenverkehr zählen.

Die Risikoneigung als Prognoseinformation kann die Bereitschaft des Landwirts abbilden, einen potentiellen Schaden in Kauf zu nehmen. d.h. wie hoch soll die Eintrittswahrscheinlichkeit eines zu versichernden Schadensereignisses sein, die zum automatischen Abschluss der Versicherung durch das Maschinenassistenzsystem führt.

Bevorzugt kann die Serverplattform eine Eingabe-Ausgabeeinheit aufweisen, welche zum Empfang der zumindest einen spezifischen Vorgabe für eine zu versichernde Einheit sowie von Angebotsdaten Dritter für eine Versicherung einer zu versichernden Einheit eingerichtet ist, sowie eine Auswerteeinheit, welche zur Auswertung der zumindest einen spezifischen Vorgabe und der Prognoseinformationen eingerichtet ist, und dass die Auswerteeinheit zum Abgleich der Auswertung mit den Angebotsdaten Dritter eingerichtet ist, um ein optimiertes Versicherungsangebot auszuwählen. Die Serverplattform ermöglicht eine übergreifende Kommunikation des Maschinenassistenzsystems mit Dritten, um basierend auf Vorgaben des Landwirts und bereitgestellten Prognoseinformationen Angebote für eine Versicherung einzuholen bzw. einzustellen.

Insbesondere kann das Maschinenassistenzsystem dazu eingerichtet sein, in Abhängigkeit von wenigstens einem vorgebaren Risikoschwellwert den Abschluss der ausgewählten Versicherung automatisch auszulösen. Der Risikoschwellwert kann die Eintrittswahrscheinlichkeit eines Schadensereignisses und/oder eine zu quantifizierende Risikoneigung des Versicherungsnehmers respektive Landwirts sein. Die Vorgabe wenigstens eines Risikoschwellwertes durch den Landwirt als Versicherungsnehmer bestimmt, unter welchen Bedingungen es zu einem automatischen Abschluss einer Versicherung kommen soll. Die Eintrittswahrscheinlichkeit eines Schadensereignisses kann aus Modellen, beispielsweise meteorologischen Modellen, und/oder aus historischem Datenmaterial gewonnen werden, denen langjährige Beobachtungen in den unterschiedlichen Regionen zugrunde liegen, in denen beispielsweise ein witterungsbedingtes Schadensereignis wiederholt aufgetreten ist. Die Risikoneigung ist hingegen eine Entscheidung des Versicherungsnehmers. Der Risikoschwellwert kann im Rahmen der Vorausplanung durch eine automatisierte Abfrage, beispielsweise durch das Maschinenassistenzsystem, die Eingabe-Ausgabeeinheit der Serverplattform oder eine sonstige Eingabeschnittstelle des Verwaltungssystems, die an den Versicherungsnehmer, insbesondere den Landwirt, gerichtet ist, ermittelt werden. Denkbar ist aber auch, dass bereits in der Vergangenheit vorgenommene Vorgaben für einen Risikoschwellwert herangezogen werden und deren Gültigkeit im Rahmen einer Abfrage bestätigt werden muss.

Des Weiteren kann das Maschinenassistenzsystem dazu eingerichtet sein, einen manuell oder automatisiert erfassten Schadensfall an die Serverplattform zu übermitteln. Insbesondere eine automatisierte Erfassung und Übermittlung eines Schadensfalls ist vorteilhaft, um insbesondere die verwaltungstechnischen Abläufe zu straffen. Im Fall eines Schadensereignisses, welches auf einen Witterungsschaden zurückgeht, kann eine Vergleichsanalyse der auf einem betroffenen Schlag vorhandenen Biomasse bspw. anhand von Bildern, die satellitengestützt oder mittels Drohneneinsatz vor und nach dem Schadensereignis aufgenommen wurden, durchgeführt werden. Ebenso ist es denkbar, dass eine landwirtschaftliche Arbeitsmaschine als versicherte Einheit eine Schadensmeldung mittels des Maschinenassistenzsystems selbsttätig an die Serverplattform übermittelt. Dabei kann das Maschinenassistenzsystem von einer zusätzlichen Steuerungsvorrichtung der Arbeitsmaschine und/oder des Arbeitsaggregates weitere Betriebsdaten der Arbeitsmaschine bzw. des Arbeitsaggregates, wie Wartungsdaten, Reparaturdaten, GPS-Daten und dergleichen mehr, empfangen und automatisiert an die Serverplattform übermitteln, wodurch eine Vereinfachung bei der Wertermittlung ermöglicht wird.

Insbesondere kann das Maschinenassistenzsystem Teil einer landwirtschaftlichen Arbeitsmaschine und/oder eines landwirtschaftlichen Arbeitsaggregates sein. Dabei kann das Maschinenassistenzsystem zur Kommunikation mit einem tragbaren Datenverarbeitungsgerät eingerichtet sein. Ein tragbares Datenverarbeitungsgerät kann ein Mobiltelefon, insbesondere ein Smartphone, ein Laptop oder ein Tablet-PC sein.

Weiterhin kann das Maschinenassistenzsystem dazu eingerichtet sein, spezifische Vorgaben selbsttätig abzufragen und anhand des Abfrageergebnisses Spezifikationsparameter und -kriterien zu bestimmen und automatisch an die Serverplattform zu übermitteln. Insbesondere wenn das Maschinenassistenzsystem Teil der landwirtschaftlichen Arbeitsmaschine ist und das Maschinenassistenzsystem zur Kommunikation mit dem tragbaren Datenverarbeitungsgerät eingerichtet ist, lassen sich mittels des tragbaren Datenverarbeitungsgerät die Vorgaben durch den Landwirt oder eine sonstige berechtigte Bedienperson eingeben und an das Maschinenassistenzsystem übertragen. Insbesondere kann das Maschinenassistenzsystem dazu eingerichtet sein, einen oder mehrere Risikoschwellwerte selbsttätig abzufragen und automatisch an die Serverplattform zu übermitteln. Dabei kann die Abfrage zyklisch wiederkehrend erfolgen. In Abhängigkeit von den Eigenschaften der zu versichernden Einheit kann diese Abfrage beispielsweise jedes Jahr erneut erfolgen oder nur bei einer Änderung der zu versichernden Einheit. Eine Änderung einer Eigenschaft der zu versichernden Einheit kann unter anderem eine Veränderung der Schlaggröße, ein neuer Schlag, eine Änderung der Fruchtfolge und/oder der Fruchtart, ein Austausch einer Arbeitsmaschine und/oder eines Arbeitsaggregates sein. Weiterhin kann auf diese Weise geänderten Anforderungen beispielsweise an die Risikoneigung oder die maximale Höhe der Versicherungsprämie als Kostenfaktor für den Landwirt, Rechnung getragen werden.

Nach einer weiteren Lehre gemäß dem Anspruch 15, welcher eigenständige Bedeutung zukommt, wird ein Verfahren zum Betreiben eines computergestützten landwirtschaftlichen Verwaltungssystems nach einem der vorangehenden Ansprüche beansprucht. Auf alle Ausführungen zu dem vorschlagsgemäßen Verwaltungssystem darf verwiesen werden.

Die vorliegende Erfindung wird nachstehend anhand eines in den Zeichnungen dargestellten Ausführungsbeispieles näher erläutert.

Es zeigen:
- Fig. 1: ein vorschlagsgemäßes Verwaltungssystem mit einer schematischen und ex-emplarischen Übersicht einer Betriebsstätte;
- Fig. 2a, 2b: schematisch und exemplarisch eine Darstellung zweier Schläge zu un-terschiedlichen Bearbeitungszeitpunkten;
- Fig. 3: ein Ablaufdiagramm eines Verfahrens zum Betreiben des vorschlagsgemäßen Verwaltungssystems.

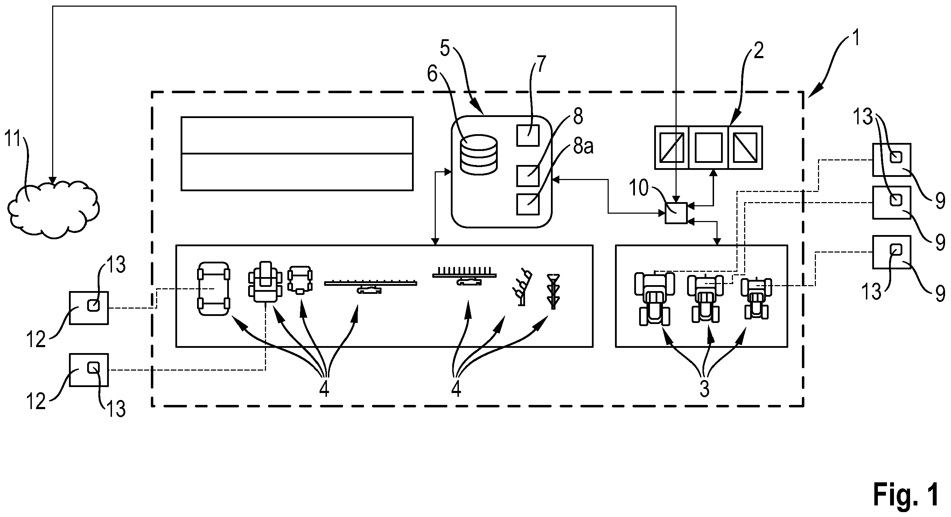

In Fig. 1 ist ein vorschlagsgemäßes computergestütztes landwirtschaftliches Verwaltungssystem mit einer schematischen und exemplarischen Übersicht einer Betriebsstätte 1 respektive Hofstätte dargestellt. Auf der Betriebsstätte 1 befinden sich Läger 2, verschiedene landwirtschaftliche Arbeitsmaschinen 3 sowie unterschiedliche landwirtschaftliche Arbeitsaggregate 4. Bei den landwirtschaftlichen Arbeitsmaschinen 3 kann es sich beispielsweise um Traktoren sowie selbstfahrende Erntemaschinen handeln. Bei den landwirtschaftlichen Arbeitsaggregate 4 kann es sich beispielsweise um Anbaugeräte oder Aufsattelgeräte für die Traktoren, Vorsatzgeräte für die Erntemaschinen, Ballenpressen, Ladewagen mit einer Aufnahmevorrichtung für Erntegut, Transportwagen und dergleichen mehr handeln.

Das Verwaltungssystem umfasst eine Serverplattform 5 mit zumindest einer Datenbank 6, einer Recheneinheit 7, einer Eingabe-Ausgabeeinheit 8, einer Auswerteinheit 8a sowie zumindest einer Schnittstelle 10 zur bidirektionalen Kommunikation mit zumindest einer externen Datenquelle 11. Den landwirtschaftlichen Arbeitsmaschinen 3 ist jeweils ein Maschinenassistenzsystem 9 zugeordnet, wobei das Maschinenassistenzsystem 9 vorzugsweise Teil der landwirtschaftlichen Arbeitsmaschinen 3 ist. Das Maschinenassistenzsystem 9 dient der Steuerung oder Regelung von Komponenten der Arbeitsmaschinen 3, wie Antriebsvorrichtung, Fahrwerk, Lenksystem, Überladesystem und/oder Spurführungssystem sowie Vorrichtungen zur Bearbeitung und Verarbeitung von Erntegut.

Den landwirtschaftlichen Arbeitsaggregaten 4 kann alternativ oder zusätzlich ein Maschinenassistenzsystem 12 zugeordnet sein, das ebenfalls der Steuerung oder Regelung von Komponenten der Arbeitsaggregate 4 dient. Das Maschinenassistenzsystem 12 kann vorzugsweise Teil des landwirtschaftlichen Arbeitsaggregates 4 sein. Die Maschinenassistenzsysteme 9 und 12 können mittels eines Bussystems untereinander kommunizieren, um zur Steuerung oder Regelung erforderliche Daten auszutauschen. Das Bussystem kann drahtgebunden oder drahtlos ausgeführt sein.

Darüber hinaus können die Maschinenassistenzsysteme 9 und 12 zusätzlich weitere Betriebsdaten wie Wartungsdaten, Reparaturdaten, GPS-Daten der Arbeitsmaschinen 3 und/oder der Arbeitsaggregate 4 bereitstellen. Diese weiteren Betriebsdaten können auch von einer zusätzlichen Steuerungsvorrichtung der Arbeitsmaschine 3 und/oder des Arbeitsaggregates 4 bereitgestellt und an die Maschinenassistenzsysteme 9 und/oder 12 übermittelt werden.

Jedes Maschinenassistenzsystem 9, 12 weist eine Eingabe-Ausgabeeinheit 13 auf, mittels der ein Bediener der Arbeitsmaschine 3 und/oder des Arbeitsaggregates 4 mit dem jeweiligen Maschinenassistenzsystem 9, 12 interagieren kann. Die Eingabe-Ausgabeeinheit 13 kann sich dabei auf der Arbeitsmaschine 3 bzw. an dem Arbeitsaggregat 4 befinden. Denkbar ist auch eine mobile Ausführung der Eingabe-Ausgabeeinheit 13 als eine tragbare Datenverarbeitungseinrichtung wie ein Mobilfunktelefon, ein Tablet oder dergleichen, welches zur Ausführung einer Anwendungssoftware und zur Kommunikation mit dem jeweiligen Maschinenassistenzsystem 9, 12 eingerichtet ist.

Weiterhin umfassen die Arbeitsmaschinen 3 und/oder die Arbeitsaggregate 4 - nicht dargestellte - Sensoreinrichtungen, die der Erfassung von Daten dienen, um Arbeits- und Betriebsabläufe zu protokollieren. Arbeits- und Betriebsabläufe umfassen von den Arbeitsmaschinen 3 und/oder die Arbeitsaggregate 4 ausgeführte Tätigkeiten, die mit der Aus- und Durchführung landwirtschaftlicher Prozesse einhergehen. Die Sensoreinrichtungen können beispielsweise der mengenmäßigen Erfassung von ausgebrachtem Saatgut, Dünger oder dergleichen dienen. Ebenso lässt sich durch eine geeignete Sensoreinrichtung eine Ertragserfassung und eine Ertragskartierung geernteten Erntegutes durchführen. Diese Daten werden mittels der zumindest einen Schnittstelle 10 automatisiert an die Serverplattform 5 des Verwaltungssystems übertragen. Die Übertragung von den Maschinenassistenzsystemen 9 und/oder 12 an die Serverplattform 5 erfolgt in der Regel zyklisch, um die hinterlegte Datenbasis der zumindest einen Datenbank 6 fortlaufend zu aktualisieren.

Als externe Datenquellen 11 kommen Datenquellen in Betracht, die sich außerhalb der Betriebsstätte 1 befinden bzw. von den Arbeitsmaschine 3 und Arbeitsaggregaten 4 unabhängig sind. Eine externe Datenquelle 11 kann beispielsweise ein GPS-Satellit, eine Wetterstation, das Internet, ein Rechenzentrum oder dergleichen sein.

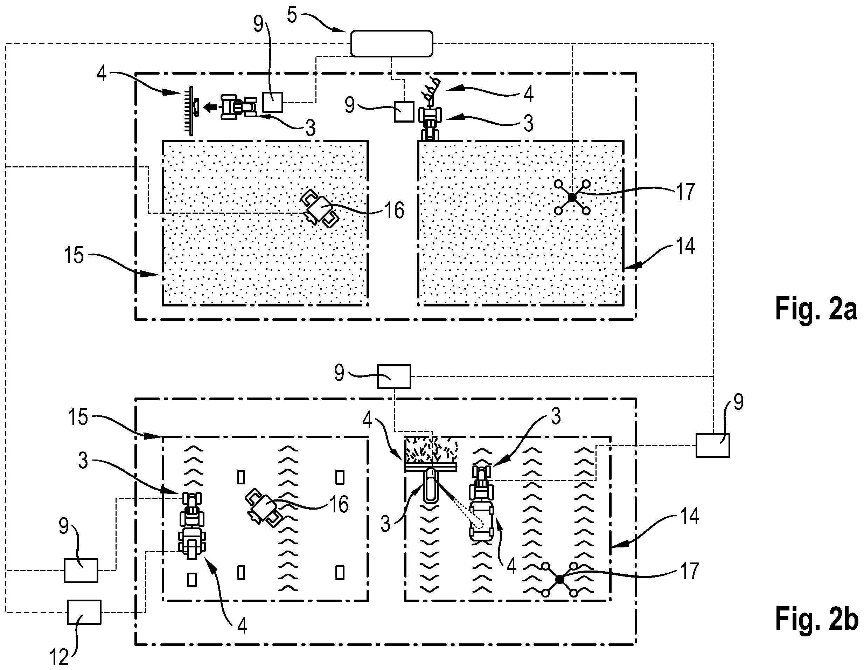

In den Fig. 2a und 2b ist schematisch und exemplarisch eine Darstellung zweier Schläge 14, 15 zu unterschiedlichen Bearbeitungszeitpunkten gezeigt. So ist in Fig. 2a auf der rechten Seite ein Schlag 14 dargestellt, der beispielsweise von einer als Traktor ausgeführten Arbeitsmaschine 3 mit einem Pflug als Arbeitsaggregat 4 bearbeitet wird. Auf der linken Seite der Fig. 2a ist ein weiterer Schlag 15 dargestellt, der beispielhaft von einer als Traktor ausgeführten Arbeitsmaschine 3 mit einer Scheibenegge als Arbeitsaggregat 4 bearbeitet wird.

In Fig. 2b ist auf der rechten Seite der Schlag 14 im Zeitpunkt der Ernte dargestellt, der beispielsweise von einer als Feldhäcksler ausgeführten Arbeitsmaschine 3 mit einem Vorsatzgerät als Arbeitsaggregat 4 bearbeitet wird. Auf der linken Seite der Fig. 2b ist der Schlag 15 dargestellt, der beispielsweise nach erfolgter Heumahd von einer als Traktor ausgeführten Arbeitsmaschine 3 mit einer Ballenpresse als Arbeitsaggregat 4 bearbeitet wird.

Wie in den Fig. 2a und 2b lediglich beispielhaft angedeutet, können die Schläge 14, 15 beispielsweise mittels eines Satelliten 16 oder einer Drohne 17 überwacht werden. Auf diese Weise lassen sich regelmäßig Daten über den Zustand des jeweiligen Schlages 14, 15 sowie die Entwicklung des darauf angebauten Erntegutes erheben und an die Serverplattform 5 des Verwaltungssystems zur Auswertung und Protokollierung übermitteln. Die von dem Satelliten 16 oder der Drohne 17 bereitgestellten Daten lassen sich durch die von der Sensoreinrichtung oder den Sensoreinrichtungen der Arbeitsmaschinen 3 und/oder der Arbeitsaggregate 4 generierten Daten zumindest ergänzen.

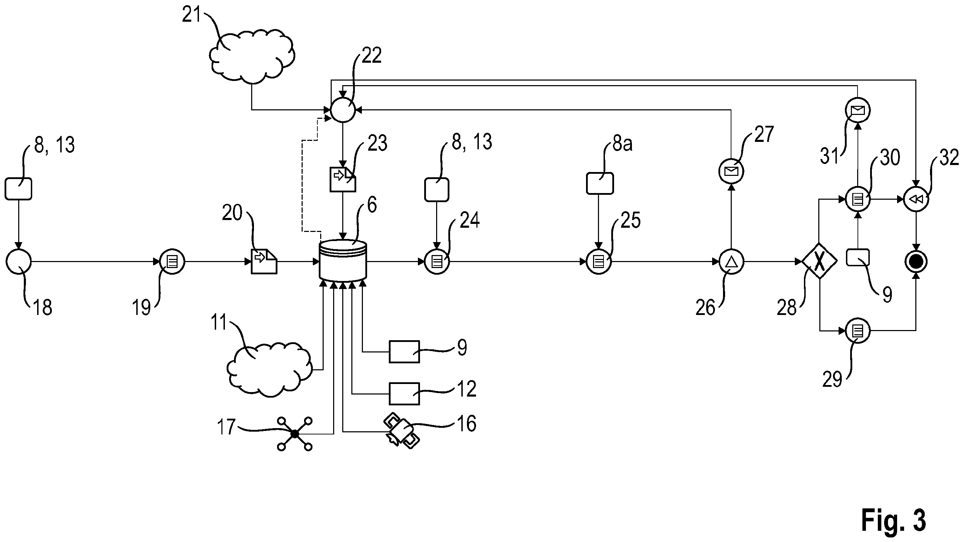

In Fig. 3 ist ein Ablaufdiagramm des Verfahrens zum Betreiben des vorschlagsgemäßen Verwaltungssystems dargestellt. Im Rahmen der Planung für die Aus- und Durchführung landwirtschaftlicher Prozesse durch das Verwaltungssystem ist es erforderlich, sich gegen Risiken abzusichern, die sich beispielsweise aus nicht beherrschbaren Naturereignissen oder anderen äußeren Einflüssen, insbesondere unter Beteiligung Dritter, ergeben können. Der Erfindung liegt der grundsätzliche Gedanke zugrunde, singuläre Risiken bei der Durchführung von landwirtschaftlichen Prozessen automatisch gezielt abzusichern. Durch zumindest eine spezifische Vorgabe für eine zu versichernde Einheit wird ein angestrebter Versicherungsschutz gezielt eingegrenzt.

Das Maschinenassistenzsystem 9, 12 ist dazu eingerichtet, in Abhängigkeit von einer Eingabe zumindest einer spezifischen Vorgabe für eine zu versichernde Einheit mittels der Eingabe-Ausgabeeinheit 13 des Maschinenassistenzsystems 9, 12 wenigstens eine Versicherung über die Serverplattform 5 automatisch abzuschließen. Hierzu werden im Schritt 18 vom Versicherungsnehmer mittels der Eingabe-Ausgabe-Einheit 8 der Serverplattform 5 oder einer Eingabe-Ausgabe-Einheit 13 eines der Maschinenassistenzsysteme 9, 12 zu versichernde Risiken als eine Vorgabe spezifiziert und vorgegeben. Bei einem zu versichernden Risiko als einzugebende spezifische Vorgabe kann es sich zum Beispiel um eine Hagelschlagversicherung, eine Ernteausfallversicherung oder eine Haftpflichtversicherung für eine der Arbeitsmaschinen 3 handeln. Die Eingabe des zu versichernden Risiko als einzugebende spezifische Vorgabe kann beispielsweise mittels einer strukturierten Abfrage erfolgen.

Im nachfolgenden Schritt 19 wird eine Selektion von Spezifikationsparametern und -kriterien mittels der zumindest einen spezifischen Vorgabe vorgenommen. Hierzu wird die zumindest eine spezifische Vorgabe gewählt aus der Gruppe zeitliche und/oder räumliche und/oder maschinenspezifische und/oder pflanzenspezifische und/oder schadensartspezifische Vorgabe. Eine zeitliche Vorgabe ist eine Begrenzung der Versicherungsdauer auf einen Zeitraum eines aufgrund der Prognoseinformationen bestimmten zu erwartenden Schadensereignisses ist.

Eine räumliche Vorgabe ist eine geografische Spezifikation der Lage eines Schlags 14, 15, der Betriebsstätte 1 oder eines Teils der Betriebsstätte 1 und/oder von Wegstrecken zwischen einem Schlag 14, 15 und der Betriebsstätte 1. Dabei bilden die Betriebsstätte 1, deren Teile sowie die Schläge 14, 15 jeweils eine zu versicherte Einheit.

Eine maschinenspezifische Vorgabe ist die Art einer landwirtschaftlichen Arbeitsmaschine 3 und/oder eines landwirtschaftlichen Arbeitsaggregates 4. Dabei bilden die landwirtschaftlichen Arbeitsmaschinen 3 sowie die landwirtschaftlichen Arbeitsaggregate 4 jeweils eine zu versicherte Einheit.

Eine pflanzenspezifische Vorgabe ist die Erntegutart, die spezifische Sorte oder die vorhandene Biomasse. Die pflanzenspezifische Vorgabe umfasst die jeweiligen Anbauinformationen eines spezifischen Schlages 14, 15. Eine schadensartspezifische Vorgabe ist ein Schaden aufgrund von Witterungseinflüssen, Schädlingsbefall, Wildtiereinflüssen und/oder eines Ausfalls von Arbeitsmaschinen 3 und/oder Arbeitsaggregaten 4 beim Führen im öffentlichen Straßenverkehr oder aufgrund eines technischen Schadens. Die vorstehend aufgeführten Vorgaben sind einzeln oder in beliebiger Kombination miteinander aus der Gruppe zeitliche und/oder räumliche und/oder maschinenspezifische und/oder pflanzenspezifische und/oder schadensartspezifische Vorgabe auswählbar. Diese Auswahl bietet dem Versicherungsnehmer, d.h. dem Landwirt als Betreiber der Betriebsstätte 1 oder als dem Bediener einer Arbeitsmaschine 3 und /oder eines Arbeitsaggregates 4, die Möglichkeit flexibel und spezifisch angepasst den Rahmen vorzugeben, für den eine Versicherung automatisch abgeschlossen werden soll.

Im Schritt 20 wird die zumindest eine eigegebene spezifische Vorgabe an die Serverplattform 5 übermittelt und in der zumindest einen Datenbank 6 hinterlegt.

Ein oder mehrere Versicherer 21 spezifizieren in einem Schritt 22 ihr Leistungsangebot, d.h. welche Risiken werden zu welchen Bedingungen versichert, sowie spezifische Auswahlkriterien für die Auswahl von Versicherungsnehmern. Das jeweilige Leistungsangebot sowie die zugehörigen Auswahlkriterien des oder der Versicherer 21 werden in einem Schritt 23 an die Serverplattform 5 übermittelt und in der zumindest einen Datenbank 6 hinterlegt. Die Schritte 22 und 23 können fortlaufend wiederholt werden, um die Leistungsangebote und zugehörigen Auswahlkriterien zu aktualisieren.

Im Schritt 24 erfolgt durch die Eingabe-Ausgabeeinheit 8, 13 der Serverplattform 5 oder einer der Maschinenassistenzsystem 9,12 eine automatisch initiierte Abfrage bezüglich einer Auswahl aus den Vorgaben, die in den vorangegangenen Schritten 18 und 19 eingegeben wurden ausgewählt. Zudem wird im Schritt 24 zumindest ein Risikoschwellwert abgefragt. Der Risikoschwellwert kann die Eintrittswahrscheinlichkeit eines spezifischen Schadensereignisses und/oder eine zu quantifizierende Risikoneigung des Versicherungsnehmers respektive Landwirts sein. Die Eintrittswahrscheinlichkeit eines Schadensereignisses kann aus Modellen, beispielsweise meteorologischen Modellen, und/oder aus historischem Datenmaterial gewonnen werden, denen langjährige Beobachtungen in den unterschiedlichen Regionen zugrunde liegt, in denen beispielsweise ein witterungsbedingtes Schadensereignis wiederholt aufgetreten ist. Denkbar ist aber auch, dass bereits in der Vergangenheit vorgenommene Vorgaben für einen Risikoschwellwert herangezogen werden und deren Gültigkeit im Rahmen dieser Abfrage bestätigt werden muss.

Die Abfrage im Schritt 24 ermöglicht es, den unterschiedlichen spezifischen Vorgaben für eine zu versichernde Einheit gewählt aus der Gruppe zeitliche und/oder räumliche und/oder maschinenspezifische und/oder pflanzenspezifische und/oder schadensartspezifische Vorgabe unterschiedliche Risikoschwellwerte zuzuordnen. Die Vorgabe eines Risikoschwellwertes bestimmt, unter welchen Bedingungen es zu einem automatischen Abschluss einer Versicherung kommen soll. Weiterhin können im Schritt 24 Angaben über ein zur Verfügung stehendes Budget gemacht werden.

Im Schritt 25 erfolgt der Abgleich der in Schritt 24 getätigten Eingaben mit den im Schritt 23 an die Serverplattform 5 übermittelten Leistungsangeboten sowie zugehörigen Auswahlkriterien des oder der Versicherer 21 durch die Auswerteeinheit 8a der Serverplattform 5, um eine geeignete Versicherung entsprechend der zumindest einen spezifischen Vorgabe für eine versicherte Einheit auszuwählen.

Im Schritt 26 wird durch das Maschinenassistenzsystem 9, 12 eine Versicherung automatisch abgeschlossen, wenn der wenigstens eine Risikoschwellwert erreicht oder passiert wird. Hierzu wird auf die in der Datenbank 6 hinterlegte Datenbasis, d.h. den eingegebenen Vorgaben des Versicherungsnehmers, den Informationen der Versicherer 21 sowie auf die zur Verfügung stehenden Prognoseinformationen aus der externen Datenquelle 11 zurückgegriffen, um das Erreichen oder Passieren des wenigstens einen Risikoschwellwertes durch eine Auswertung mittels der Recheneinheit 7 der Serverplattform 5 bestimmen zu können. Die Automatisierung des Abschlusses durch das Maschinenassistenzsystem 9, 12 führt zu einer Vereinfachung der Erlangung und zur Optimierung des Versicherungsschutzes. Ein Versicherungsschutz wird im Rahmen der zumindest einer spezifischen Vorgabe für eine versicherte Einheit abgeschlossen, wobei der Versicherungsschutz insbesondere zeitlich, räumlich und/oder vorrichtungsspezifisch abgeschlossen wird.

Im Schritt 27 werden die für den Abschluss erforderlichen Vertragsdaten automatisch an den Versicherer 21 übertragen.

Mit Schritt 28 ist eine durch die Serverplattform 5 auszuführende Bewertung bei einem Eintritt eines Schadensereignisses bezeichnet. Dabei wird für den Fall, dass kein versichertes Schadensereignis vorliegt zum Schritt 29 verzweigt. Handelt es sich hingegen um ein versichertes Schadensereignis, wird zum Schritt 30 übergegangen.

Im Schritt 30 werden für das Schadensereignis relevante Daten automatische ermittelt und in der Datenbank 6 der Serverplattform 5 hinterlegt. Die für das Schadensereignis relevanten Daten können, neben der Art des Schadens und der Lokalisation, insbesondere Daten über das Ausmaß des Schadens umfassen. Die Daten zum Ausmaß des Schadens können dabei beispielsweise durch den Satelliten 16 oder die Drohne 17 bestimmt werden, wenn es sich um einen der Schläge 14, 15 handelt, die von einem Ernteausfall betroffen sind. Hierzu kann ein Bildvergleich der Biomasse des betreffenden Schlages 14, 15 von zeitnah entstanden Aufnahmen vor und nach dem Schadensereignis durchgeführt werden. Ebenso denkbar ist eine Erfassung der für ein Schadensereignis relevanten Daten durch eine geeignete Sensoreinrichtung der Arbeitsmaschine 3 und/oder des Arbeitsaggregates 4. Die relevanten Daten können von dem Maschinenassistenzsystem 9, 12 aus der Datenbank 6 ausgelesen und im Schritt 31 an die betreffende Versicherung zur Meldung und anschließenden Schadensabwicklung übermittelt werden. Es besteht auch die Möglichkeit, dass die Serverplattform 5 die erfassten Daten zum Schadensereignis an die Versicherung 21 übermittelt.

Betrifft das Schadensereignis beispielsweise eine der Arbeitsmaschinen 3, so kann das Maschinenassistenzsystem 9 der betroffenen Arbeitsmaschine 3 für das Schadensereignis relevante Daten an die Versicherung 21 übermitteln. Die Arbeitsmaschine 3 kann beispielsweise Betriebsdaten, den Wartungszustand, Reparaturdaten etc. übermitteln, was die Möglichkeit zur Wertermittlung eröffnet. GPS-Daten der Arbeitsmaschine können Informationen über den aktuellen Standort der Arbeitsmaschine 3 liefern.

Im Schritt 32 ist die Schadensregulierung abgeschlossen.

### Bezugszeichenliste

- 1: Betriebsstätte
- 2: Lager
- 3: Arbeitsmaschine
- 4: Arbeitsaggregat
- 5: Serverplattform
- 6: Datenbank
- 7: Recheneinheit
- 8: Eingabe-Ausgabeeinheit
- 9: Maschinenassistenzsystem
- 10: Schnittstelle
- 11: Externe Datenquelle
- 12: Maschinenassistenzsystem
- 13: Eingabe-Ausgabeeinheit
- 14: Schlag
- 15: Schlag
- 16: Satellit
- 17: Drohne
- 18: Schritt
- 19: Schritt
- 20: Schritt
- 21: Versicherer
- 22: Schritt
- 23: Schritt
- 24: Schritt
- 25: Schritt
- 26: Schritt
- 27: Schritt
- 28: Schritt
- 29: Schritt
- 30: Schritt
- 31: Schritt
- 32: Schritt

## Patentansprüche

1. Computergestütztes landwirtschaftliches Verwaltungssystem zur Planung, Überwachung und Verwaltung von Arbeits- und Betriebsdaten zur Aus- und Durchführung landwirtschaftlicher Prozesse, wobei das Verwaltungssystem eine Serverplattform (5) mit zumindest einer Datenbank (6) sowie zumindest einer Schnittstelle (10) zur bidirektionalen Kommunikation mit zumindest einer externen Datenquelle (11) umfasst, wobei die zumindest eine Datenbank (6) zur zyklisch aktualisierbaren Hinterlegung einer für die Planung, Überwachung und Verwaltung von landwirtschaftlichen Prozessen relevanten Datenbasis eingerichtet ist,
**dadurch gekennzeichnet,**
**dass** ein Maschinenassistenzsystem (9, 12) dazu eingerichtet ist, in Abhängigkeit von einer Eingabe zumindest einer spezifischen Vorgabe mittels einer Eingabe-Ausgabeeinheit (13) des Maschinenassistenzsystems (9, 12) wenigstens eine Versicherung über die Serverplattform (5) automatisch abzuschließen, wobei das Maschinenassistenzsystem (9, 12) dazu eingerichtet ist, unter Berücksichtigung der zumindest einen eingegebenen spezifischen Vorgabe, der hinterlegten Datenbasis und von empfangenen Prognoseinformationen, die von der zumindest einen externen Datenquelle (11) bereitgestellt werden, die Eintrittswahrscheinlichkeit eines zu versichernden Schadensereignisses zu bestimmen und eine geeignete Versicherung auszuwählen.

2. Computergestütztes landwirtschaftliches Verwaltungssystem nach Anspruch 1, **dadurch gekennzeichnet, dass** die zumindest eine spezifische Vorgabe gewählt ist aus der Gruppe zeitliche und/oder räumliche und/oder maschinenspezifische und/oder pflanzenspezifische und/oder schadensartspezifische Vorgabe.

3. Computergestütztes landwirtschaftliches Verwaltungssystem nach Anspruch 2, **dadurch gekennzeichnet, dass** eine zeitliche Vorgabe eine Begrenzung der Versicherungsdauer auf einen Zeitraum eines aufgrund der Prognoseinformationen bestimmten zu erwartenden Schadensereignisses ist.

4. Computergestütztes landwirtschaftliches Verwaltungssystem nach Anspruch 2 oder 3, **dadurch gekennzeichnet, dass** eine räumliche Vorgabe eine geografische Spezifikation eines Schlags (14, 15) oder mehrere Schläge (14, 15), einer Betriebsstätte (1) oder eines Teils der Betriebsstätte (1) und/oder von Wegstrecken zwischen einem Schlag (14, 15) und der Betriebsstätte (1) und/oder mehreren Schlägen (14, 15) ist.

5. Computergestütztes landwirtschaftliches Verwaltungssystem nach Anspruch 2 bis 4, **dadurch gekennzeichnet, dass** eine maschinenspezifische Vorgabe die Art einer landwirtschaftlichen Arbeitsmaschine (3) und/oder eines landwirtschaftlichen Arbeitsaggregates (4) ist.

6. Computergestütztes landwirtschaftliches Verwaltungssystem nach Anspruch 2 bis 5, **dadurch gekennzeichnet, dass** eine pflanzenspezifische Vorgabe die Erntegutart, die spezifische Sorte oder die vorhandene Biomasse ist.

7. Computergestütztes landwirtschaftliches Verwaltungssystem nach Anspruch 2 bis 6, **dadurch gekennzeichnet, dass** eine schadensartspezifische Vorgabe ein Schaden aufgrund von Witterungseinflüssen, Schädlingsbefall, Wildtiereinflüssen und/oder eines Ausfalls von Arbeitsmaschine (3) und/oder Arbeitsaggregate (4) beim Führen im öffentlichen Straßenverkehr und/oder aufgrund eines technischen Ausfalls während eines landwirtschaftlichen Arbeitsprozesses ist.

8. Computergestütztes landwirtschaftliches Verwaltungssystem nach einem der vorangehenden Ansprüche, **dadurch gekennzeichnet, dass** die Prognoseinformationen gewählt sind aus der Gruppe umfassend äußere Einflüsse, Ertragsdaten, Planungsdaten, statistische Daten, Anbauinformationen, geografische Daten, Risikoneigung und/oder Ernteguteigenschaften.

9. Computergestütztes landwirtschaftliches Verwaltungssystem nach einem der vorangehenden Ansprüche, **dadurch gekennzeichnet, dass** die Serverplattform (5) eine Eingabe-Ausgabeeinheit (8) aufweist, welche zum Empfang der zumindest einen spezifischen Vorgabe sowie von Angebotsdaten Dritter für eine Versicherung einer zu versichernden Einheit eingerichtet ist, sowie eine Auswerteeinheit (8a), welche zur Auswertung der zumindest einen spezifischen Vorgabe und der Prognoseinformationen eingerichtet ist, und dass die Auswerteeinheit (8a) zum Abgleich der Auswertung mit den Angebotsdaten Dritter eingerichtet ist, um ein optimiertes Versicherungsangebot auszuwählen.

10. Computergestütztes landwirtschaftliches Verwaltungssystem nach einem der vorangehenden Ansprüche, **dadurch gekennzeichnet, dass** das Maschinenassistenzsystem (9, 12) dazu eingerichtet ist, in Abhängigkeit von wenigstens einem vorgebaren Risikoschwellwert den Abschluss der ausgewählten Versicherung automatisch auszulösen.

11. Computergestütztes landwirtschaftliches Verwaltungssystem nach Anspruch 9 oder 10, **dadurch gekennzeichnet, dass** das Maschinenassistenzsystem (9, 12) dazu eingerichtet ist, einen manuell oder automatisiert erfassten Schadensfall an die Serverplattform (5) zu übermitteln.

12. Computergestütztes landwirtschaftliches Verwaltungssystem nach einem der vorangehenden Ansprüche, **dadurch gekennzeichnet, dass** das Maschinenassistenzsystem (9, 12) Teil einer landwirtschaftlichen Arbeitsmaschine (3) und/oder eines landwirtschaftlichen Arbeitsaggregates (4) ist.

13. Computergestütztes landwirtschaftliches Verwaltungssystem nach einem der vorangehenden Ansprüche, **dadurch gekennzeichnet, dass** das Maschinenassistenzsystem (9, 12) dazu eingerichtet ist, spezifische Vorgaben selbsttätig abzufragen und anhand des Abfrageergebnisses Spezifikationsparameter und -kriterien zu bestimmen und automatisch an die Serverplattform (5) zu übermitteln.

14. Computergestütztes landwirtschaftliches Verwaltungssystem nach einem der vorangehenden Ansprüche, **dadurch gekennzeichnet, dass** das Maschinenassistenzsystem (9, 12) dazu eingerichtet ist, einen oder mehrere Risikoschwellwerte selbsttätig abzufragen und automatisch an die Serverplattform (5) zu übermitteln.

15. Verfahren zum Betreiben eines computergestützten landwirtschaftlichen Verwaltungssystems nach einem der vorangehenden Ansprüche zum automatisierten Abschluss einer Versicherung, **dadurch gekennzeichnet, dass** ein Maschinenassistenzsystem (9, 12) verwendet wird, um in Abhängigkeit von einer Eingabe zumindest einer spezifischen Vorgabe mittels einer Eingabe-Ausgabeeinheit (13) des Maschinenassistenzsystems (9, 12) wenigstens eine Versicherung über eine Serverplattform (5) automatisch abzuschließen, wobei das Maschinenassistenzsystem (9, 12) dazu verwendet wird, unter Berücksichtigung der zumindest einen eingegebenen spezifischen Vorgabe, der hinterlegten Datenbasis und von empfangenen Prognoseinformationen, die von der zumindest einen externen Datenquelle (11) bereitgestellt werden, die Eintrittswahrscheinlichkeit eines zu versichernden Schadensereignisses zu bestimmen und eine geeignete Versicherung auszuwählen.
